# DEMANDE DE BREVET EUROPEEN

(11) **EP 3 081 774 A1**
(43) Date de publication de la demande: **19.10.2016**
(21) Numéro de dépôt: 16160826.0
(22) Date de dépôt: 17.03.2016
(51) Int. Cl.: F01N 3/035, F01N 3/20, F01N 9/00, F01N 3/00, F02D 41/14

(54) **PROCÉDÉ DE CHAUFFE D'UNE SONDE**

(30) Priorité: 01.04.2015 FR 1552778
(71) Demandeur: Peugeot Citroën Automobiles SA, 78140 Vélizy-Villacoublay (FR)
(72) Inventeur: CHASSEFEYRE, VINCENT, 77290 MITRY MORY (FR)

(57) **Abrégé**

Procédé de chauffe d'une sonde (18) placée dans une ligne (4) d'échappement d'un groupe (2) motopropulseur, lors du démarrage de ce groupe (2) motopropulseur, ce procédé comprenant une étape de mesure de la température dans la ligne (4) d'échappement, et des étapes consistant à :
- compter le nombre de démarrages antérieurs du groupe 2) motopropulseur ;
- déterminer un premier coefficient de retardement de la chauffe de la sonde (18) à partir du nombre de démarrages antérieurs ainsi comptés ;
- mesurer une pression différentielle dans un filtre (16) à particules monté en amont de la sonde (18) ;
- déterminer un deuxième coefficient de retardement de la chauffe de la sonde (18) à partir de la pression différentielle ainsi mesurée, et
- chauffer la sonde (18) à partir des coefficients de retardement précédemment déterminés.

## Description

L'invention a trait au domaine des véhicules automobiles, plus particulièrement aux groupes motopropulseurs pourvus d'un dispositif de dépollution des gaz d'échappement, et notamment à la chauffe de sondes équipant ces dispositifs de dépollution.

Les véhicules automobiles, et notamment les véhicules automobiles équipés d'un groupe motopropulseur utilisant, en totalité ou en partie, le gasoil comme carburant, sont pourvus de dispositifs de dépollution des gaz d'échappement.

La dépollution des gaz d'échappement est une contrainte à laquelle les constructeurs de véhicules automobiles doivent répondre, afin de limiter la quantité de particules polluantes que chaque véhicule rejette et préserver l'environnement.

On a constaté, au cours des années, un durcissement des normes anti-pollution auxquelles sont soumis tous les nouveaux véhicules. Dès lors, les dispositifs de dépollution des véhicules sont devenus plus sophistiqués, générant des problèmes de fiabilité, et donc des pannes, et engendrant des frais d'entretien importants pour les propriétaires des véhicules.

Parmi ces problèmes de fiabilité, on retrouve notamment l'encrassement des dispositifs de dépollution, ou encore l'usure prématurée de certains composants comme par exemple les sondes destinées à mesurer certains constituants des gaz d'échappement.

D'une manière générale, les dispositifs de dépollution comprennent un système de réduction catalytique (SCR), pour réduire la quantité d'oxydes d'azote (ci-après dénommés NOx), éventuellement un filtre à particules pour emmagasiner les suies des gaz d'échappement, et au moins une sonde. La sonde permet de mesurer le taux de NOx pour permettre l'injection d'une solution d'urée, en amont du SCR, pour éliminer une grande partie des NOx présents dans les gaz d'échappement.

La sonde est un composant fragile du dispositif de dépollution, qui a besoin d'être chauffé à une température de fonctionnement (aux alentours de 800°C) et il convient de la protéger de certains éléments, notamment de l'eau. La combustion, dans le moteur, d'un mélange air/carburant, provoque la création de vapeurs d'eau qui, en se refroidissant, se condense et forme de l'eau dans la ligne d'échappement.

L'eau ainsi générée est expulsée de la ligne d'échappement par les gaz d'échappement et peut, sur son parcours, entrer en contact avec la sonde. Lorsque la sonde est chauffée à 800°C, le contact local de l'eau avec la sonde provoque un refroidissement local de la sonde et, par conséquent, une dégradation de la sonde. Il en résulte une usure prématurée pouvant mettre en défaut le dispositif de dépollution, rendant le véhicule polluant.

Pour prévenir ce risque d'usure prématurée, il est connu de différer le temps de chauffe de la sonde à partir du démarrage du moteur.

Ainsi, le document US 2007/0271904 présente un système de contrôle de la chauffe d'une sonde, ce système prenant en compte ou mesurant des informations telles que la position du levier de vitesse, la température du liquide de refroidissement du moteur ou encore la température dans la ligne d'échappement.

Si ce système permet de retarder la chauffe de la sonde et, ainsi d'empêcher la dégradation et l'usure prématurée de la sonde, ce système n'est pas sans inconvénients.

Premièrement, ce système prend en compte un grand nombre de paramètres, dont certains ne sont pas en lien direct avec le fonctionnement du système. Pour le levier de vitesse par exemple, le système n'est pas mis en oeuvre dans certaines positions. Or, le moteur du véhicule peut être en fonctionnement dans toutes les positions du levier de vitesses. Il en résulte alors soit un retard important dans le fonctionnement de la sonde, soit une chauffe de la sonde trop rapide, au risque qu'elle soit endommagée par l'eau. Dans les deux cas, le système ne permet pas une dépollution optimale des gaz d'échappement du véhicule.

Deuxièmement, le temps de calcul de l'activation de la chauffe de la sonde est rallongé, à cause du nombre important de paramètres pris en compte. En effet, l'acquisition de l'ensemble des paramètres demande un temps qui peut être important, notamment pour le levier de vitesse. Ainsi, la dépollution n'est pas optimale.

Troisièmement, ce système ne prend pas en compte les différentes zones de stockage potentiel de l'eau. En effet, certains composants ou certaines parties de la ligne d'échappement présentent des caractéristiques propres à favoriser le stockage d'eau. Ainsi, lors de la mise en marche du moteur, les gaz d'échappement poussent l'eau vers l'extrémité de la ligne d'échappement opposée au moteur, ce qui peut provoquer une rencontre de l'eau avec la sonde, tant que la ligne d'échappement n'est pas à une température supérieure à environ 100°C et que l'eau n'est pas évacuée.

Un premier objectif est de proposer un procédé de chauffe d'une sonde permettant de retarder la chauffe de la sonde, afin de protéger la sonde de l'eau contenue dans la ligne d'échappement.

Un deuxième objectif est de proposer un tel procédé qui soit rapide d'exécution et facilement paramétrable.

Un troisième objectif est de proposer un groupe motopropulseur pourvu d'un calculateur apte à mettre en oeuvre le procédé de chauffage d'une sonde répondant aux objectifs précédents.

Un quatrième objectif est de proposer un véhicule automobile comprenant un groupe motopropulseur répondant à l'objectif précédent.

A cet effet, il est proposé, en premier lieu, un procédé de chauffe d'une sonde placée dans une ligne d'échappement d'un groupe motopropulseur, lors du démarrage de ce groupe motopropulseur, ce procédé comprenant une étape de mesure de la température dans la ligne d'échappement, ainsi que des étapes consistant à :
- compter le nombre de démarrages antérieurs du groupe motopropulseur durant une période prédéfinie ;
- déterminer un premier coefficient de retardement de la chauffe de la sonde au moyen d'un tableau faisant correspondre un coefficient de retardement à un nombre de démarrages antérieurs ainsi comptés;
- mesurer une différence de pression dans un filtre à particules, entre un démarrage et un démarrage immédiatement suivant du groupe motopropulseur, le filtre à particules étant monté avant la sonde selon le sens d'écoulement des gaz d'échappement ;
- analyser la différence de pression entre les deux démarrages et incrémenter un compteur en cas d'augmentation de la pression entre les deux démarrages ;
- déterminer un deuxième coefficient de retardement de la chauffe de la sonde au moyen d'un tableau faisant correspondre un coefficient de retardement à une incrémentation du compteur précédemment déterminée, et
- chauffer la sonde en intégrant les coefficients de retardement précédemment déterminés,
la mesure de la température dans la ligne d'échappement permettant, si cette température est inférieure à une valeur prédéterminée, de procéder aux étapes de détermination des coefficients de retardement.

Ce procédé permet de retarder la chauffe de la sonde en prenant en compte des paramètres facilement identifiables et mesurables, et prenant en compte les composants du groupe motopropulseur favorisant le stockage de l'eau.

Diverses caractéristiques supplémentaires peuvent être prévues, seules ou en combinaison :
- le procédé comprend également une étape de mesure de la température d'un n liquide de refroidissement du groupe motopropulseur ;
- le procédé comprend également une étape de mesure du temps de fonctionnement du groupe motopropulseur entre deux démarrages consécutifs ;
- le procédé comprend également une étape de remise à zéro des coefficients de retardement si la mesure du temps de fonctionnement précédemment réalisée est supérieure à un temps seuil prédéterminé ;
- la mesure de la pression dans le filtre à particules est réalisée à l'aide d'un capteur mesurant une pression différentielle entre une entrée et une sortie du filtre à particules, pour chaque démarrage ;
- la mesure de la pression dans le filtre à particules est réalisée à l'aide d'un capteur mesurant une pression à une entrée du filtre à particules, pour chaque démarrage ;
- le procédé comprend une étape de remise à zéro des coefficients de retardement, dès qu'un temps prédéterminé d'utilisation du groupe motopropulseur est atteint.

Il est proposé, en deuxième lieu, un groupe motopropulseur comprenant :
- un moteur ;
- une ligne d'échappement raccordée au moteur ;
- un filtre à particules monté sur la ligne d'échappement pour permettre de filtrer certains composants nocifs des gaz d'échappement ;
- une sonde montée sur la ligne d'échappement, en aval du filtre à particules, c'est-à-dire après le filtre à particules suivant le sens d'écoulement des gaz d'échappement dans la ligne d'échappement, et
- un calculateur, relié à la sonde, apte à mettre en oeuvre le procédé de chauffe tel que précédemment décrit.

Avantageusement, le groupe motopropulseur comprend également un système de réduction catalytique placé sur la ligne d'échappement, en amont du filtre à particules.

Enfin, il est proposé, en troisième lieu, un véhicule automobile comprenant un groupe motopropulseur tel que présenté précédemment.

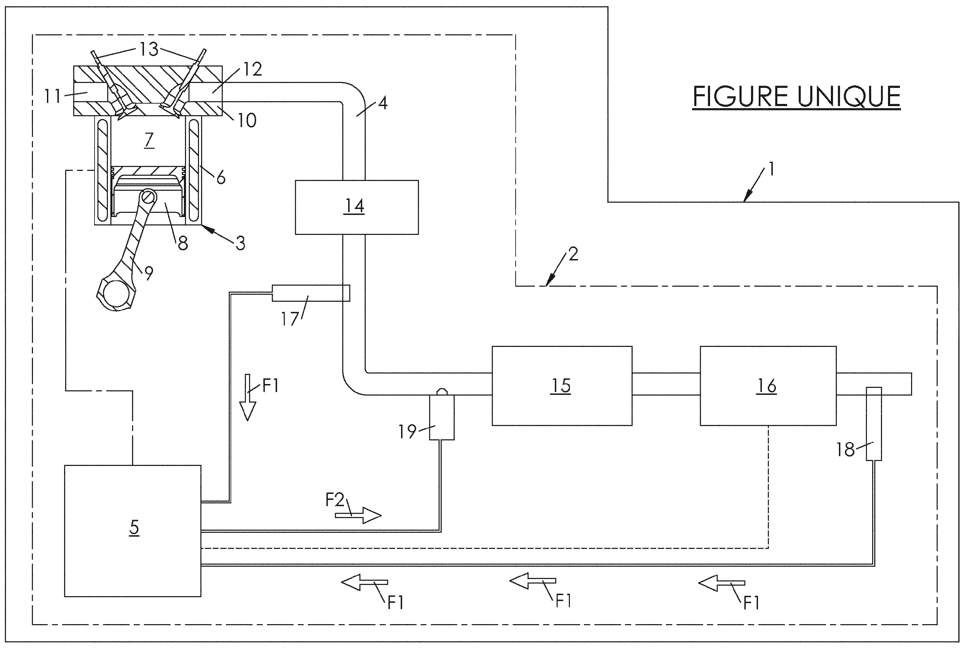

D'autres objets et avantages de l'invention apparaîtront à la lumière de la description d'un mode de réalisation, faite ci-après en référence à l'unique figure montrant, de manière schématique, un véhicule comprenant un groupe motopropulseur ayant un moteur et une ligne d'échappement permettant la dépollution de gaz d'échappement en sortie du moteur.

Le véhicule **1,** schématiquement représenté sur la figure est équipé d'un groupe **2** motopropulseur comprenant un moteur **3,** une ligne **4** d'échappement et un calculateur **5.** Comme nous le verrons ci-après, le groupe **2** motopropulseur est configuré pour utiliser le gasoil comme carburant principal.

En référence à la figure et à la disposition des différents éléments du groupe **2** motopropulseur, il est entendu que les termes « amont » et « aval » font référence au sens d'écoulement des gaz d'échappement dans la ligne **4** d'échappement. Ainsi, un premier élément placé en amont d'un deuxième élément sera considéré comme étant placé avant le deuxième élément, et un premier élément placé en aval d'un deuxième élément sera considéré comme placé après le deuxième élément.

Pour des raisons de simplification et de clarté, le moteur **3** n'est pas intégralement représenté, seul un cylindre **6,** définissant une chambre **7** de combustion, dans lequel circule un piston **8,** selon un mouvement de translation dans le cylindre 6 est représenté. Le piston **8** est raccordé à une bielle **9** qui permet de transmettre le mouvement du piston **8** à un vilebrequin, non représenté.

Le cylindre **6** est obturé, à une extrémité supérieure, par une culasse **10** pourvue de deux conduits **11, 12** à savoir un conduit **11** d'admission par lequel un mélange d'air et de carburant est injecté dans la chambre **7** de combustion, et un conduit **12** d'échappement par lequel des gaz d'échappement, issus de la combustion du mélange air/carburant, sont éjectés du moteur **3,** dans la ligne **4** d'échappement.

La liaison entre les conduits **11, 12** et la chambre **7** de combustion est pilotée au moyen de soupapes **13** pouvant adopter une position ouverte dans laquelle les soupapes **13** sont écartées de la culasse **10** vers la chambre **7** de combustion pour permettre la mise en communication fluidique entre les conduits **11, 12** et la chambre **7** de combustion, et une position fermée dans laquelle les soupapes **13** sont au contact de la culasse **10** et empêchent la communication fluidique entre les conduits **11, 12** et la chambre **7** de combustion.

Avantageusement, les soupapes **13** sont pilotées indépendamment l'une de l'autre, de telle sorte que lorsque l'une des soupapes **13** est en position ouverte, l'autre soupape **13** est en position fermée.

La ligne **4** d'échappement est raccordée au conduit **12** d'échappement et permet de guider les gaz d'échappement hors du véhicule **1** tout en permettant de les dépolluer pour respecter l'environnement. Dans le cas d'un moteur **3** comprenant plusieurs cylindres **6** (comme c'est le cas pour la majorité des moteurs équipant les véhicules **1** automobiles), la ligne **4** d'échappement est reliée aux conduits **12** d'échappement de chacun des cylindres **6** au moyen d'un collecteur d'échappement, non représenté.

La ligne **4** d'échappement comprend un catalyseur **14** d'oxydation (ci-après dénommé DOC **14**), un système **15** de réduction catalytique (ci-après dénommé SCR **15** selon son acronyme anglais) et un filtre **16** à particules (ci-après dénommé FAP **16**). En outre, la ligne **4** d'échappement comprend deux sondes **17, 18,** à savoir une sonde **17** amont et une sonde **18** aval, ainsi qu'un injecteur **19** permettant l'injection d'une solution d'urée dans la ligne **4** d'échappement. Les solutions d'urée sont notamment utilisées pour permettre la dépollution des gaz d'échappement des véhicules **1** automobiles utilisant le gasoil comme carburant principal.

Sur leur parcours, les gaz d'échappement rencontrent, dans l'ordre, d'abord le DOC **14,** puis le SCR **15** et enfin le FAP **16.**

Le DOC **14** permet d'oxyder les gaz d'échappement transformant les oxydes d'azote (NOx), générant du dioxyde de carbone (CO₂) ou encore de l'eau (H₂O).

En sortie du DOC **14,** les NOx sont capturés par le SCR **15** et, enfin, le FAP **16** retient les émissions de suie qui sont éliminées par une régénération du FAP **16,** procédure non décrite dans ce texte.

La sonde **17** amont est positionnée en sortie du DOC **14,** en amont de l'injecteur **19.** La sonde **18** aval est, quant à elle, placée en aval du FAP **16.** Les sondes **17, 18** et l'injecteur **19** sont reliés au calculateur **5** qui acquiert des informations (représentées par les flèches **F1** sur la figure) provenant des sondes **17, 18** et génère des consignes d'injection (représentées par la flèche **F2** sur la figure) pour l'injecteur **19.**

La sonde **18** aval mesure le taux de NOx produit par le véhicule **1** puis fournit au calculateur **5** une information permettant d'adapter la consigne d'injection de l'injecteur **19.**

Pour fonctionner, la sonde **18** aval a besoin d'être chauffée à une température d'environ 800°C. Durant sa chauffe, la sonde **18** aval ne doit pas entrer en contact avec l'eau, sous peine de se détériorer et de devenir inutilisable.

L'eau obtenue dans le DOC **14** est transformée en vapeur, par l'effet de la température régnant dans la ligne **4** d'échappement, et ne présente dès lors que très peu de dangers pour la sonde **18** aval, lors de la chauffe de cette sonde **18** aval.

Toutefois, lorsque le véhicule **1** est à l'arrêt et que la température dans la ligne **4** d'échappement est basse, une condensation s'opère dans la ligne **4** d'échappement, et cette eau sera poussée par les gaz d'échappement lors du redémarrage suivant du groupe **2** motopropulseur.

Il est donc nécessaire de retarder la chauffe de la sonde **18** aval, jusqu'à ce que l'eau de la ligne **4** d'échappement soit évacuée, par exemple par la pression des gaz d'échappement ou par vaporisation due à la montée en température de la ligne **4** d'échappement, et au moins jusqu'à ce que le calculateur **5** estime qu'il n'y a plus d'eau présente dans la ligne **4** d'échappement.

A cet effet, le calculateur est programmé pour permettre la mise en oeuvre d'un procédé de chauffe de la sonde **18** aval, ce procédé comprenant les étapes consistant à :
- mesurer la température dans la ligne **4** d'échappement ;
- compter le nombre de démarrages antérieurs du groupe **2** motopropulseur ;
- déterminer un premier coefficient de retardement de la chauffe de la sonde **18** aval, à partir du nombre de démarrages antérieurs ainsi comptés ;
- mesurer une pression différentielle dans le FAP **16 ;**
- déterminer un deuxième coefficient de retardement de la chauffe de la sonde **18** aval, à partir de la pression différentielle ainsi mesurée, et
- chauffer la sonde **18** aval à partir des coefficients de retardement précédemment déterminés.

La mesure de la température dans la ligne **4** d'échappement est réalisée au moyen d'une sonde de température (non représentée), placée dans la ligne **4** d'échappement et connectée au calculateur **5** afin de transmettre la valeur de la température régnant dans la ligne **4** d'échappement.

La mesure de la température dans la ligne **4** d'échappement est une étape préliminaire permettant de définir s'il est nécessaire de retarder la chauffe de la sonde **18** aval par la détermination des coefficients de retardement.

En effet, le calculateur **5** compare la valeur de température mesurée avec une valeur prédéterminée à laquelle l'eau présente dans la ligne **4** d'échappement est transformée en vapeur. Si la valeur mesurée est égale ou supérieure à la valeur prédéterminée, alors il n'est pas nécessaire de procéder à un retard de la chauffe de la sonde **18** aval. Au contraire, si la valeur mesurée est inférieure à la température prédéterminée, alors il est nécessaire de retarder la chauffe de la sonde **18** aval.

D'autres étapes préliminaires pourraient être combinées à la mesure de la température de la ligne **4** d'échappement, par exemple, la mesure de la température du liquide de refroidissement du moteur **3.** En se basant sur la température du liquide de refroidissement, le calculateur **5** est capable de déterminer la température du moteur **3** ainsi que la température de la ligne **4** d'échappement et peut, par conséquent, définir un besoin de retarder ou non la chauffe de la sonde **18** aval. La liaison entre le moteur **3** et le calculateur **5,** pour la mesure de la température du liquide de refroidissement, est représentée sur la figure par la ligne en traits mixtes longs.

Le calculateur **5** peut également estimer le temps entre deux démarrages successifs du groupe **2** motopropulseur et la durée de chaque utilisation du groupe **2** motopropulseur.

Grâce à la durée entre deux démarrages successifs et à certaines mesures effectuées durant l'utilisation du groupe **2** motopropulseur, le calculateur **5** peut déterminer s'il est nécessaire de retarder ou non la chauffe de la sonde **18** aval. Parmi les mesures effectuées durant l'utilisation du groupe **2** motopropulseur, on pourra citer, à titre non limitatif, la mesure de la température du moteur **3** ou encore la mesure de la température du liquide de refroidissement du moteur **3.**

Si le calculateur **5** détermine qu'il est nécessaire de retarder la chauffe de la sonde **18** aval, alors le calculateur **5** procède au comptage du nombre de démarrages antérieurs du groupe **2** motopropulseur et repère si ledit démarrage répond à des conditions d'incrément.

La période durant laquelle le nombre de démarrages antérieurs du groupe **2** motopropulseur est étudié sera définie ci-après.

Les conditions d'incrément sont par exemple un temps réduit entre deux démarrages, sans que la température prédéterminée n'ait été atteinte dans la ligne **4** d'échappement, ou encore l'identification d'un temps écoulé entre deux démarrages, ce temps étant identifié comme favorisant le refroidissement de la ligne **4** d'échappement et donc la création d'eau dans la ligne **4** d'échappement.

Une fois le nombre de démarrages antérieurs identifié, le calculateur **5** se réfère à une table de valeurs définissant un premier coefficient de retardement à appliquer.

Le tableau ci-dessous met en avant l'évolution du premier coefficient de retardement de la chauffe, en fonction du nombre de démarrages antérieurs.

| Nombre de démarrages antérieurs | Le démarrage répond-il aux conditions d'incrément ? | Coefficient |
|---|---|---|
| 0 | Non | 1 |
| 1 | Oui | 1,1 |
| 2 | Oui | 1,3 |
| 3 | Non | 1,3 |
| 4 | Oui | 1,4 |
| 5 | Oui | 1,8 |
| 6 | Oui | 3 |
| 7 | Non | 3 |
| 8 | Oui | 3,2 |

Grâce au tableau ci-dessus, le calculateur **5** peut déterminer un premier coefficient de retardement de la chauffe de la sonde **18** aval. Par exemple, pour le cinquième démarrage, identifié sur la ligne entourée de traits gras dans le tableau ci-dessus, le calculateur **5** intègre que le démarrage répond aux conditions d'incrément, et utilise le coefficient de valeur 1,4 pour retarder la chauffe de la sonde **18** aval.

Ainsi, le déclenchement de la chauffe de la sonde **18** aval est effectué selon une première étape d'application d'un retardement de la chauffe de la sonde **18** aval, en fonction de spécifications fournies par le fabricant de la sonde **18** aval, multiplié par le premier coefficient de retardement de la chauffe.

Dans notre cas, cinquième démarrage, la chauffe de la sonde **18** aval est retardée du temps d'attente préconisé par le fabricant de la sonde **18** aval, multiplié par 1,4, valeur du premier coefficient de retardement qui vient d'être déterminé.

Lorsque le premier coefficient de retardement est déterminé, le calculateur **5** procède à une étape de mesure de la pression dans le FAP **16.**

La mesure de pression dans le FAP **16** est réalisée à chaque démarrage du groupe **2** motopropulseur et la valeur de la pression est enregistrée par le calculateur **5.** La liaison entre le calculateur **5** et le FAP **16** est représentée sur la figure par une ligne en traits pointillés.

Selon un premier mode de réalisation, la mesure de la pression dans le filtre **16** à particules est réalisée à l'aide d'un capteur mesurant une pression différentielle entre une entrée et une sortie du filtre **16** à particules, pour chaque démarrage.

Selon un second mode de réalisation, la mesure de la pression dans le filtre **16** à particules est réalisée à l'aide d'un capteur mesurant une pression à une entrée du filtre **16** à particules, pour chaque démarrage.

Lorsque la mesure de pression est effectuée, le calculateur **5** analyse la différence de pression dans le FAP **16** avec le démarrage immédiatement précédent. Si la pression dans le FAP **16** a augmentée entre les deux démarrages, cela signifie que le FAP **16** a emmagasiné de l'eau et qu'il est nécessaire de retarder la chauffe de la sonde **18** aval de sorte à empêcher que l'eau du FAP **16** ne vienne au contact de la sonde **18** aval lors de sa chauffe.

Dans ce cas, le calculateur **5** détermine un deuxième coefficient de retardement de chauffe.

Le tableau ci-dessous met en avant l'évolution du deuxième coefficient de retardement de chauffe en fonction l'évolution de la pression entre deux démarrages successifs dans le FAP **16.**

| Nombre de démarrages moteur antérieurs | La pression a-t-elle augmentée ? | Coefficient |
|---|---|---|
| 0 | Non | 1 |
| 1 | Oui | 1,1 |
| 2 | Oui | 1,3 |
| 3 | Non | 1,3 |
| 4 | Oui | 1,4 |
| 5 | Oui | 1,8 |
| 6 | Oui | 3 |
| 7 | Non | 3 |
| 8 | Oui | 3,2 |

Grâce au tableau ci-dessus, le calculateur **5** peut déterminer le deuxième coefficient de retardement de chauffe de la sonde **18** aval. En conservant le cinquième démarrage de l'exemple précédent, identifié sur la ligne entourée de traits gras, le calculateur **5** intègre que la pression dans le FAP **16** a augmentée et utilise le coefficient de valeur 1,4 pour retarder la chauffe de la sonde **18** aval.

Dans notre cas, cinquième démarrage, la chauffe de la sonde **18** aval est retardée du temps d'attente préconisé par le fabricant de la sonde **18** aval, multiplié par le premier coefficient de retardement précédemment déterminé auquel on additionne le deuxième coefficient de retardement qui vient d'être déterminé.

Toutefois, l'addition du premier coefficient de retardement avec le deuxième coefficient de retardement entraîne un retard important de la chauffe de la sonde **18** aval, au bénéfice de la protection de la sonde **18** aval, mais au détriment de l'efficacité de la dépollution des gaz d'échappement. En effet, plus long est le temps de mise en fonctionnement de la sonde **18** aval et plus long est le calcul de la quantité de solution d'urée à injecter dans la ligne **4** d'échappement.

Ainsi, les gaz de dépollution sont traités plus tardivement et une plus grande quantité de particules polluantes est rejetée dans l'atmosphère.

Pour pallier cet inconvénient, les deux coefficients sont rassemblés dans une même table et le résultat est optimisé pour que le retard de chauffe de la sonde **18** aval soit assez important pour éviter tout contact de l'eau avec la sonde **18** aval lors de sa chauffe, tout en permettant de procéder à une dépollution optimale au plus tôt.

Le tableau ci-dessous met en avant l'évolution d'un coefficient de retardement de chauffe global, c'est-à-dire comprenant le premier coefficient et le deuxième coefficient, en fonction du nombre de démarrages antérieurs d'une part, et de la pression différentielle dans le FAP 16 d'autre part.

| Nombre de démarrages antérieurs | Le démarrage répond-il aux conditions d'incrément ? | La pression a-t-elle augmentée ? | Coefficient global |
|---|---|---|---|
| 0 | Non | Non | 1 |
| 1 | Oui | Oui | 1,1 |
| 2 | Oui | Non | 1,3 |
| 3 | Non | Non | 1,3 |
| 4 | Oui | Oui | 2,1 |
| 5 | Oui | Oui | 2,8 |
| 6 | Oui | Non | 3 |
| 7 | Non | Non | 4 |
| 8 | Oui | Oui | 5 |

Dans notre cas, cinquième démarrage identifié par les traits gras dans le tableau ci-dessus, la chauffe de la sonde **18** aval est retardée du temps d'attente préconisé par le fabricant de la sonde **18** aval, multiplié par le coefficient global de retardement précédemment déterminé.

Contrairement à l'addition du premier coefficient et du deuxième coefficient qui donnerait un coefficient d'une valeur de 2,8, le coefficient global a une valeur de 2,1. Il en résulte un retard de chauffe de la sonde **18** aval permettant d'éviter tout risque de contact de l'eau sur la sonde **18** aval lors de sa chauffe, et une mise à disposition rapide de la sonde **18** aval pour permettre une dépollution efficace et optimale des gaz d'échappement.

Enfin, le procédé comprend une étape de remise à zéro des coefficients dès qu'un temps seuil d'utilisation du groupe **2** motopropulseur est atteint.

En effet, après un certain temps d'utilisation, le groupe **2** motopropulseur atteint une température telle qu'il n'y a plus d'eau dans la ligne **4** d'échappement. Dès lors il n'est plus nécessaire de prendre en compte le (ou les) coefficient(s) précédemment déterminé(s). Ainsi, le calculateur **5** procède à la remise à zéro des coefficients.

Toutefois, la remise à zéro des coefficients demande un temps avantageusement long, de sorte que d'éventuels redémarrages du groupe **2** motopropulseur soient pris en compte. C'est par exemple le cas si le véhicule **1** utilise la technologie « start and stop » qui prévoit l'arrêt du moteur **3** lorsque le véhicule **1** est arrêté et sa boîte de vitesses au neutre, par exemple lors d'un arrêt prolongé à un stop ou d'un arrêt à un feu rouge.

La remise à zéro des coefficients concerne également la période durant laquelle le nombre de démarrages antérieurs du groupe 2 motopropulseur est étudié. Ainsi, la période durant laquelle le nombre de démarrages antérieurs du groupe **2** motopropulseur est étudié débute à la suite d'une remise à zéro des coefficients et se termine à la remise à zéro des coefficients immédiatement suivante.

La description du procédé de retard de chauffe n'est pas limitative à la chauffe de la sonde **18** aval. En effet, la description est également applicable à la sonde **17** amont ou à toute sonde placée sur la ligne **4** d'échappement.

Le procédé et le groupe **2** motopropulseur qui viennent d'être décrits présentent plusieurs avantages.

Tout d'abord, le procédé permet de limiter les risques de détérioration de la sonde **18** aval à cause de l'eau circulant dans la ligne **4** d'échappement, en retardant la chauffe de la sonde **18** aval.

De plus, le retard de la chauffe de la sonde **18** aval est optimisé afin de permettre une chauffe rapide et sûre de la sonde **18** aval sans toutefois, réduire l'efficacité de la dépollution des gaz d'échappement.

En outre, le système est facilement paramétrable puisque les valeurs des tables peuvent être modifiées simplement sur un ordinateur, puis intégrées dans le calculateur **5** lors d'une mise à jour du calculateur **5.**

Enfin, le groupe **2** motopropulseur assure une bonne dépollution des gaz d'échappement grâce au procédé qui permet d'ajuster la quantité de solution d'urée à injecter en amont du SCR **15** pour augmenter l'efficacité du SCR **15** et dépolluer les gaz d'échappement.

## Revendications

1. Procédé de chauffe d'une sonde **(18)** placée dans une ligne **(4)** d'échappement d'un groupe **(2)** motopropulseur, lors du démarrage de ce groupe **(2)** motopropulseur, ce procédé comprenant une étape de mesure de la température dans la ligne **(4)** d'échappement, **caractérisé en ce que** le procédé comprend également les étapes consistant à :
- compter le nombre de démarrages antérieurs du groupe **(2)** motopropulseur durant une période prédéfinie ;
- déterminer un premier coefficient de retardement de la chauffe de la sonde **(18)** au moyen d'un tableau faisant correspondre un coefficient de retardement à un nombre de démarrages antérieurs ainsi comptés ;
- mesurer une différence de pression dans un filtre **(16)** à particules, entre un démarrage et un démarrage immédiatement suivant du groupe **(2)** motopropulseur, le filtre **(16)** à particules étant monté avant la sonde **(18)** selon le sens d'écoulement des gaz d'échappement ;
- analyser la différence de pression dans le filtre **(16)** à particules entre les deux démarrages et incrémenter un compteur en cas d'augmentation de la pression entre les deux démarrages ;
- déterminer un deuxième coefficient de retardement de la chauffe de la sonde **(18)** au moyen d'un tableau faisant correspondre un coefficient de retardement à une incrémentation du compteur précédemment déterminée, et
- chauffer la sonde **(18)** en intégrant les coefficients de retardement précédemment déterminés,
la mesure de la température dans la ligne **(4)** d'échappement permettant, si cette température est inférieure à une valeur prédéterminée, de procéder aux étapes de détermination des coefficients de retardement.

2. Procédé selon la revendication précédente, **caractérisé en ce qu**'il comprend également une étape de mesure de la température d'un liquide de refroidissement du groupe **(2)** motopropulseur.

3. Procédé selon l'une quelconque des revendications précédentes, **caractérisé en ce qu**'il comprend également une étape de mesure du temps de fonctionnement du groupe **(2)** motopropulseur entre deux démarrages consécutifs.

4. Procédé selon la revendication 3, **caractérisé en ce qu**'il comprend également une étape de remise à zéro des coefficients de retardement si la mesure du temps de fonctionnement précédemment réalisée est supérieure à un temps seuil prédéterminé.

5. Procédé selon l'une quelconque des revendications précédentes, **caractérisé en ce que** la mesure de la pression dans le filtre **(16)** à particules est réalisée à l'aide d'un capteur mesurant une pression différentielle entre une entrée et une sortie du filtre **(16)** à particules, pour chaque démarrage.

6. Procédé selon l'une quelconque des revendications 1 à 4, **caractérisé en ce que** la mesure de la pression dans le filtre **(16)** à particules est réalisée à l'aide d'un capteur mesurant une pression à une entrée du filtre **(16)** à particules, pour chaque démarrage.

7. Procédé selon l'une quelconque des revendications précédentes, **caractérisé en ce qu**'il comprend une étape de remise à zéro des coefficients de retardement, dès qu'un temps prédéterminé d'utilisation du groupe **(2)** motopropulseur est atteint.

8. Groupe **(2)** motopropulseur comprenant :
- un moteur **(3) ;**
- une ligne **(4)** d'échappement raccordée au moteur **(3) ;**
- un filtre **(16)** à particules monté sur la ligne **(4)** d'échappement pour permettre de filtrer certains composants nocifs des gaz d'échappement ;
- une sonde **(18)** montée sur la ligne **(4)** d'échappement en aval du filtre **(16)** à particules, et
- un calculateur **(5),** relié à la sonde **(18),** apte à mettre en oeuvre le procédé de chauffe selon l'une quelconque des revendications précédentes.

9. Groupe **(2)** motopropulseur selon la revendication précédente, **caractérisé en ce qu**'il comprend également un système **(15)** de réduction catalytique placé sur la ligne **(4)** d'échappement, en amont du filtre **(16)** à particules.

10. Véhicule **(1)** automobile comprenant un groupe **(2)** motopropulseur selon l'une des revendications 8 ou 9.
